# FASCICULE DE BREVET EUROPEEN

(11) **EP 3 712 743 B1**
(45) Date de publication et mention de la délivrance du brevet: **16.08.2023**
(21) Numéro de dépôt: 20163438.3
(22) Date de dépôt: 16.03.2020
(51) Int. Cl.: G06F 1/18, G06F 1/20

(54) **MODULE D'INTERCONNEXION DISSIPANT POUR CARTE D'EXTENSION A FACTEUR DE FORME M.2**
DISSIPATIVES VERBINDUNGSMODUL FÜR ERWEITERUNGSKARTE MIT M.2 FORMFAKTOR
DISSIPATIVE INTERCONNECTION MODULE FOR EXPANSION CARD WITH M.2 FORM FACTOR

(30) Priorité: 19.03.2019 FR 1902831
(43) Date de publication de la demande: 23.09.2020
(73) Titulaire: Bull SAS, 78340 Les Clayes-sous-Bois (FR)
(72) Inventeur: DALLASERRA, Luc, 75009 Paris (FR)
(74) Mandataire: Cabinet Camus Lebkiri

(56) Documents cités:
- US-A1- 2016 335 220
- US-B1- 10 003 153

## Description

### DOMAINE TECHNIQUE DE L'INVENTION

Le domaine technique de l'invention est celui des modules de refroidissement pour cartes d'extension.

La présente invention concerne un module d'interconnexion dissipant permettant la connexion à une carte électronique d'une carte d'extension à facteur de forme M.2 et le refroidissement de cette carte d'extension et en particulier de cartes d'extension à facteur de forme M.2 pour des lames de calcul montables dans le bâti d'une armoire informatique.

### ARRIERE-PLAN TECHNOLOGIQUE DE L'INVENTION

Les lames de calcul pour armoires informatiques peuvent comprendre par exemple des processeurs, des cartes graphiques, de la mémoire vive telle que des barrettes mémoire, du stockage de masse tel que des disques durs. Ces lames de calcul sont par exemple utilisées pour réaliser du calcul haute performance, ses éléments dégagent donc de la chaleur en fonctionnement et doivent être refroidis pour assurer leur bon fonctionnement et leur durabilité.

Etant montées sur bâti, la circulation d'air n'est pas suffisante au sein des armoires informatiques pour refroidir efficacement les lames de calcul en utilisant des système de refroidissement à air.

C'est pourquoi des systèmes de refroidissement fluidiques ont été développés. Ces systèmes de refroidissement comprennent par exemple des tuyaux, le plus souvent en cuivre, dans lesquels circule un fluide. Ces tuyaux peuvent être connectés directement aux composants à refroidir, par exemple en formant une boucle autour des composants. Le fluide peut aussi circuler entre deux plaques, par exemple de métal, au moins une des deux plaques étant directement connectée à un composant à refroidir. Il est aussi possible de braser des canaux à l'intérieur d'une plaque de métal, par exemple du cuivre, pour y faire passer le fluide. Le fluide peut ainsi circuler dans une plaque de métal connectée à un composant, par exemple le long d'une barrette mémoire.

Ces systèmes de refroidissement fluidiques sont encombrants car ils nécessitent un espace autour des composants pour les plaques en métal accueillant le fluide.

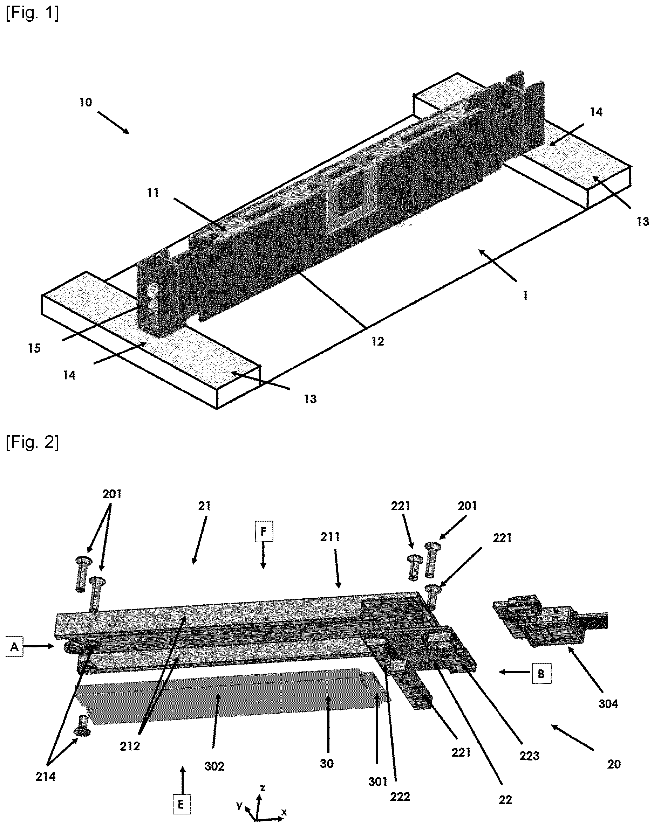

D'autres systèmes de refroidissement hybrides existent, possédant les avantages du refroidissement fluidique et ceux du refroidissement par contact sec. C'est le cas par exemple du brevet FR2966318 intitulé « Carte électronique pourvue d'un système de refroidissement liquide » qui propose un système de refroidissement comprenant un module de refroidissement dans lequel circule un liquide de refroidissement, et un dissipateur amovible conducteur, se plaçant en contact avec les surfaces d'un composant électronique au travers d'un matériau thermique pour récupérer les calories produites par le composant, le dissipateur étant en contact sec avec le module de refroidissement de manière amovible, par exemple par des vis. Ce système connu de l'état de la technique est présenté Figure 1. Ce système permet d'avoir un encombrement réduit autour du composant, car aucun fluide ne circule autour du composant.

[Fig. 1] représente un système de refroidissement selon l'état de la technique.

Ainsi, dans le système de refroidissement 10 représenté Figure 1, les calories produites par le composant électronique 11 sont récupérées par le dissipateur 12 via un coussinet thermique puis transmises au système de refroidissement fluidique 13 via les points de contact sec 14. Le dissipateur 12 et le système de refroidissement fluidique 13 sont maintenus ensemble par des vis 15 par contact sec. Cela rend le dissipateur 12 amovible, permettant l'accès au composant 11. Le seul point de contact du dissipateur 12 avec le système de refroidissement fluidique 13 est donc le point de contact sec 14.

Le système de refroidissement fluidique 13 est aussi appelé « plaque froide » et peut être par exemple être en métal, par exemple en aluminium. Cette plaque froide peut par exemple parcourir l'ensemble de la lame de calcul et au moins une partie des composants de la lame de calcul peuvent y être connectés. Le composant électronique 11 peut par exemple être une barrette mémoire.

Le dissipateur 12 de la Figure 1 est en contact thermique avec le composant 11 lorsque le composant 11 est connecté à la carte électronique 1. Ainsi, si le composant est un disque dur, une carte réseau Wi-Fi ou Bluetooth ou encore une carte de navigation satellite accueillant une antenne GPS (selon la dénomination anglo-saxonne « Global Positioning System » traduit littéralement en « Système Mondial de Positionnement »).

Le facteur de forme M.2 a été créé pour supporter plusieurs options de cartes d'extension de petites dimensions, dont des disques SSD (selon la dénomination anglo-saxonne « Solid-State Drive », des disques à semi-conducteurs), des cartes réseaux ou encore des cartes de navigation satellite. Initialement, le plus petit facteur de forme des SSD était mSATA, mais mSATA ne peut pas évoluer vers des capacités supérieures à 1 Teraoctet et garder une rentabilité suffisante. De plus, les connecteurs mSata sont encombrants. Le facteur de forme M.2, aussi appelé NGFF (selon la dénomination anglo-saxonne « Next Génération Form Factor » traduit littéralement en « Facteur de Forme de Nouvelle Génération ») a été créé pour maximiser l'utilisation de l'espace d'une carte électronique tout en diminuant l'empreinte du connecteur.

On entend par « carte d'extension » une carte électronique connectable à un module informatique, par exemple à une armoire informatique, comprenant un ensemble de composant permettant d'étendre les capacités du module informatique. Selon cette définition, une carte d'extension peut être un disque SSD, une barrette mémoire, une carte réseau, une carte graphique, une carte son, ou toute autre carte électronique connectable à un module informatique.

Une carte d'extension à facteur de forme M.2 doit être en position verticale pour être refroidie en utilisant le système de refroidissement 10 de l'état de la technique présenté Figure 1. En effet, le connecteur M.2 est situé sur l'un des deux bords de 22 millimètres de large. Sur le bord opposé, un trou semi-circulaire est percé pour permettre la fixation du composant sur une carte électronique 1. Il est donc complexe et coûteux de fixer une carte d'extension à facteur de forme M.2 en position verticale sur une carte électronique 1.

De plus, pour une carte d'extension à facteur de forme M.2, les dimensions les plus courantes sont 22 millimètres de large et 30 millimètres de long, 22mm x 42mm, 22mm x 60mm, 22mm x 80mm et 22mm x 110mm. Ces dimensions impliquent un encombrement important en hauteur lorsqu'elle est connectée à une carte électronique 1 en position verticale. Il n'est pas possible d'utiliser une telle carte d'extension en position verticale dans une lame de calcul montable en bâti d'armoire informatique ayant une hauteur d'une unité de rack (couramment nommée « 1U »), c'est-à-dire de 44.45 millimètres.

Le système de refroidissement 10 de l'art antérieur n'est pas adaptable pour une carte d'extension à facteur de forme M.2 montée horizontalement, notamment car il n'est pas possible de refroidir les deux surfaces chauffantes de la carte d'extension et de fixer de manière amovible le système 10 de l'art antérieur tout en gardant la carte d'extension connectée de manière horizontale à la carte électronique 1. De plus, les cartes d'extension à facteur de forme M.2 ne sont pas connectables ou déconnectables à chaud. Ainsi, pour réaliser une opération de maintenance sur la carte d'extension à facteur de forme M.2 ou sur le système de refroidissement 10 de l'art antérieur il faudrait alors couper l'alimentation de la lame de calcul, ce qui n'est pas souhaitable dans le cas par exemple d'une armoire informatique dédiée au calcul haute performance.

Les documents US 2016/335220 A1 intitulé « STACKED-DEVICE PERIPHERAL STORAGE CARD » du 17 novembre 2016 et US 10 003 153 B1 intitulé « Connecter module » du 19 Juin 2018 sont connus de l'état de la technique.

Il existe donc un besoin d'un système permettant le refroidissement des deux surfaces d'une carte d'extension à facteur de forme M.2 et une maintenance simple, sans que la carte d'extension à facteur de forme M.2 ait un encombrement vertical important.

### RESUME DE L'INVENTION

L'invention offre une solution aux problèmes évoqués précédemment, en permettant un refroidissement efficace des deux surfaces d'une carte d'extension à facteur de forme M.2 et une disposition horizontale du module, tout en permettant un montage et un démontage du dissipateur thermique du système de l'invention sans avoir à déconnecter la carte d'extension à facteur de forme M.2 et donc sans avoir à couper l'alimentation de la carte électronique à laquelle il est connecté.

Un aspect de l'invention concerne ainsi un module d'interconnexion dissipant pour carte d'extension à facteur de forme M.2, ladite carte d'extension devant être connectée à une première carte électronique comprenant un système de refroidissement fluidique, ladite carte d'extension comprenant une première surface d'échange thermique, une deuxième surface d'échange thermique et au moins un premier connecteur M.2 configuré pour être connecté à au moins un deuxième connecteur M.2, ledit module d'interconnexion dissipant étant caractérisé en ce que :
- le module d'interconnexion dissipant comprend un dissipateur thermique, ledit dissipateur thermique comprenant :
   - une enveloppe comprenant une paroi supérieure configurée pour être en contact thermique avec la première surface d'échange thermique de la carte d'extension, l'enveloppe comprenant en outre deux pattes, chaque patte étant configurée pour être en contact thermique avec la paroi supérieure du dissipateur thermique et pour être en contact thermique avec le système de refroidissement fluidique de la première carte électronique, la paroi supérieure et les deux pattes de l'enveloppe étant agencés de manière à former un espace adapté pour recevoir la carte d'extension,
   - un système de fixation mécanique configuré pour fixer mécaniquement de manière amovible la carte d'extension au dissipateur thermique,
- le module d'interconnexion dissipant comprend une carte électronique d'interconnexion, ladite carte électronique d'interconnexion comprenant le deuxième connecteur M.2, au moins un troisième connecteur électrique configuré pour être connecté à au moins un quatrième connecteur électrique de la première carte électronique, la carte électronique d'interconnexion étant configurée pour être fixée mécaniquement de manière amovible au dissipateur thermique,
- le module d'interconnexion dissipant est configuré pour être fixé mécaniquement de manière amovible à la première carte électronique.

Outre les caractéristiques qui viennent d'être évoquées dans les paragraphes précédents, le module d'interconnexion dissipant selon un aspect de l'invention peut présenter une ou plusieurs caractéristiques complémentaires parmi les suivantes, considérées individuellement ou selon toutes les combinaisons techniquement possibles :
- Le dissipateur thermique comprend en outre une paroi inférieure configurée pour être en contact thermique avec la deuxième surface d'échange thermique de la carte d'extension, avec chaque patte de l'enveloppe du dissipateur thermique et avec le système de refroidissement fluidique, ladite paroi inférieure étant intercalée entre l'enveloppe du dissipateur thermique et le système de refroidissement fluidique de la première carte électronique.
- Chaque contact thermique du dissipateur thermique est réalisé par une interface thermique, chaque interface thermique étant comprise dans une pluralité d'interfaces thermiques, la pluralité d'interfaces thermiques étant comprise dans le dissipateur thermique.
- La carte d'extension à facteur de forme M.2 est un disque SSD à facteur de forme M.2.
- Le système de fixation mécanique du dissipateur thermique comprend au moins une vis.
- Le module d'interconnexion est fixé mécaniquement de manière amovible à la première carte électronique par un système de fixation comprenant au moins une vis.
- La carte électronique d'interconnexion est fixée mécaniquement de manière amovible au dissipateur thermique par un système de fixation comprenant au moins une vis.
- Le troisième connecteur de la carte électronique d'interconnexion et le quatrième connecteur de la première carte électronique sont des connecteurs de stockage de même type.

Grâce à l'invention, il est possible de refroidir une carte d'extension à facteur de forme M.2 tout en facilitant la maintenance et du dissipateur thermique de l'invention et de la carte d'extension à facteur de forme M.2. En effet, le module d'interconnexion dissipant selon l'invention permet et de refroidir une carte d'extension M.2 grâce au dissipateur thermique, et de connecter la carte d'extension M.2 de manière horizontale à une carte électronique qui réalise l'interconnexion avec la première carte électronique à laquelle la carte d'extension doit être connectée. Cette interconnexion permet à la carte d'extension M.2 d'être toujours connectée dans la même disposition, indépendamment de la disposition du connecteur de la carte mère, et donc d'être refroidie toujours dans la même disposition.

L'enveloppe du dissipateur thermique en contact thermique avec le système de refroidissement fluidique de la première carte électronique et avec la première surface d'échange thermique de la carte d'extension permet avantageusement d'avoir le chemin thermique le plus court entre chaque surface d'échange thermique de la carte d'extension M.2 et le système de refroidissement thermique.

Lorsque l'on mentionne que deux éléments sont « en contact thermique », on entend qu'au moins une surface d'un élément capte la chaleur émise par l'autre surface, soit en étant en contact direct, soit à travers une interface thermique, par exemple formée d'une pâte thermique ou de tout autre matériau thermique.

Une interface thermique est composée d'un matériau thermique, tel qu'une pâte thermique molle. Par exemple, cette pâte thermique molle peut comprendre du silicone. Un avantage de l'utilisation d'une pâte thermique molle est que celle-ci est déformable. Ainsi, il est possible d'avoir un contact thermique optimal tout en réduisant le risque d'endommager les composants de la carte d'extension 30. De plus, par son caractère déformable, une compression de l'interface thermique est ainsi possible, pour réaliser un meilleur contact thermique.

De plus, l'enveloppe possède deux pattes en contact thermique avec la paroi supérieure de l'enveloppe et avec le système de refroidissement. Ces deux pattes forment avec la paroi supérieure de l'enveloppe un espace agencé pour recevoir la carte d'extension M.2, et donc permettent avantageusement à l'enveloppe du dissipateur thermique d'envelopper la carte d'extension M.2 pour récupérer une plus grande partie de la chaleur émise et pour la rediriger vers le système de refroidissement, tout en protégeant la carte d'extension M.2 d'éventuels chocs. De plus, l'enveloppe est peu coûteuse à fabriquer puisqu'elle ne comprend qu'une paroi supérieure et deux pattes. Cette enveloppe permet à elle seule de refroidir la carte d'extension M.2, tout en ayant un encombrement faible en hauteur.

La carte électronique d'interconnexion est fixée mécaniquement de manière amovible au dissipateur thermique. Le fait que cette fixation mécanique soit amovible facilite la maintenance, permettant avantageusement de désolidariser le dissipateur thermique de la carte d'interconnexion sans déconnecter la carte d'interconnexion de la première carte électronique.

De plus, le dissipateur thermique comprend un système de fixation permettant de fixer mécaniquement de manière amovible la carte d'extension M.2 au dissipateur thermique. Le fait que cette fixation mécanique soit amovible permet de désolidariser le dissipateur thermique de la carte d'extension M.2, donc de ne pas avoir à déconnecter la carte d'extension M.2 de la carte d'interconnexion. Cela permet par exemple de réaliser une maintenance du dissipateur thermique sans déconnecter la carte d'extension M.2 de carte électronique d'interconnexion et sans déconnecter la carte électronique d'interconnexion de la première carte électronique, donc permettant de garder le connexion électrique entre la carte d'extension M.2 et la première carte électronique.

Le dissipateur thermique du module d'interconnexion dissipant peut comprendre en outre une paroi inférieure en contact thermique avec les pattes de l'enveloppe du dissipateur thermique, avec la deuxième surface d'échange thermique de la carte d'extension M.2 et avec le système de refroidissement fluidique de la première carte électronique. Cela permet avantageusement d'avoir un dissipateur thermique enveloppant la carte d'extension M.2 grâce à l'enveloppe et à la paroi inférieure et donc protégeant mieux la carte d'extension lors d'une opération de maintenance.

### BREVE DESCRIPTION DES FIGURES

Les figures sont présentées à titre indicatif et nullement limitatif de l'invention.
- La figure 1 montre une représentation schématique d'un système de refroidissement selon l'état de la technique.
- La figure 2 montre une représentation schématique d'une vue éclatée du module d'interconnexion dissipant selon un premier mode de réalisation de l'invention.
- La figure 3 montre une représentation schématique du module d'interconnexion dissipant selon un premier mode de réalisation de l'invention vu de dessous.
- La figure 4 montre une représentation schématique du module d'interconnexion dissipant selon un premier mode de réalisation de l'invention en vue éclatée de face.
- La figure 5 montre une représentation schématique du module d'interconnexion dissipant selon un premier mode de réalisation de l'invention vu de côté.
- La figure 6 montre une représentation schématique du module d'interconnexion dissipant selon un deuxième mode de réalisation de l'invention en vue partiellement éclatée.
- La figure 7 montre une représentation schématique du module d'interconnexion dissipant selon un deuxième mode de réalisation de l'invention.
- La figure 8 montre une représentation schématique du module d'interconnexion dissipant selon un deuxième mode de réalisation de l'invention vu de côté.

### DESCRIPTION DETAILLEE D'AU MOINS UN MODE DE REALISATION DE L'INVENTION

Les figures sont présentées à titre indicatif et nullement limitatif de l'invention. Sauf précision contraire, un même élément apparaissant sur des figures différentes présente une référence unique.

[Fig. 2] montre une représentation schématique d'une vue éclatée du module d'interconnexion dissipant selon un premier mode de réalisation de l'invention.

Le module d'interconnexion dissipant 20 selon l'invention est représenté schématiquement à la Figure 2 dans une vue éclatée en trois dimensions selon trois axes x, y et z. Quatre repères sont représentés : A, B, E et F. Les repères A et B représentent chacune une vue d'un côté, le côté A pour le repère A et le côté B pour le repère B. Le repère E représente une vue de dessous et le repère F représente une vue de dessus.

Le module d'interconnexion dissipant 20 selon un premier mode de réalisation de l'invention comprend une carte électronique d'interconnexion 22 et un dissipateur thermique comprenant une enveloppe 21. Ce module d'interconnexion dissipant 20 assure le refroidissement d'une carte d'extension 30 à facteur de forme M.2 grâce au dissipateur thermique qu'il comprend et, grâce à la carte électronique d'interconnexion qu'il comprend, l'interconnexion de cette carte d'extension 30 avec une première carte électronique 1 (non représentée figure 2), par exemple une carte mère, par exemple la carte mère d'une lame de calcul montable dans le bâti d'une armoire informatique.

Comme indiqué précédemment, cette carte d'extension 30 à facteur de forme M.2 peut par exemple être un disque SSD (selon la dénomination anglo-saxonne « Solid-State Drive » pour « disque dur à semiconducteur ») à facteur de forme M.2, ou toute autre carte permettant d'étendre les capacités d'un module informatique. La carte d'extension 30 comprend au moins un premier connecteur M.2, par exemple un connecteur M.2 mâle configuré pour être connecté à au moins un deuxième connecteur M.2, par exemple un connecteur M.2 femelle. La carte d'extension 30 comprend en outre deux surfaces d'échange thermique, une première surface d'échange thermique 303 et une deuxième surface d'échange thermique 303.

Lorsque la carte d'extension 30 est un disque SSD à facteur de forme M.2 dissipant par les deux faces, c'est-à-dire que chacune de ses faces émet de la chaleur car il comprend des composants en fonctionnement sur chacune de ses deux faces, une face du disque SSD est la première surface d'échange thermique et l'autre face est la deuxième surface d'échange thermique. Lorsque le disque SSD à facteur de forme M.2 dissipe de la chaleur par une seule face, c'est-à-dire lorsqu'il ne comprend des composants que sur une seule face, la face dissipant de la chaleur peut être la première surface d'échange thermique ou la deuxième surface d'échange thermique. L'autre face du disque SSD ne dissipant pas de la chaleur est alors l'autre surface d'échange thermique.

L'enveloppe 21 du module d'interconnexion dissipant 20 comprend une paroi supérieure 211 et deux pattes 212. La paroi 211 est dite « supérieure » car dans un mode de réalisation préférentiel, lorsque le module d'interconnexion dissipant 20 est fixé mécaniquement de manière amovible à la surface supérieure, c'est-à-dire la surface tournée vers le repère F, d'une première carte électronique en position horizontale, la paroi 211 est située au-dessus de la carte d'extension 30 et des autres composants du module d'interconnexion dissipant 20, par exemple de la carte électronique d'interconnexion 22. Il sera évident pour l'homme du métier que dans d'autres dispositions, par exemple lorsque le module d'interconnexion dissipant 20 est fixé mécaniquement de manière amovible à la surface inférieure d'une première carte électronique en position horizontale, la paroi supérieure est toujours la paroi 211, bien qu'elle ne soit pas située au-dessus de la carte d'extension 30.

Le terme « supérieure » pour désigner la paroi 211 se réfère donc à sa position dans le mode de réalisation préférentiel par rapport aux autres composants du module d'interconnexion dissipant 20 comme décrit précédemment.

La paroi supérieure 211 peut par exemple être en aluminium, en cuivre, ou en tout autre matériau conducteur thermique.

Chacune des deux pattes 212 comprises dans l'enveloppe 21 est en contact thermique avec la paroi supérieure 211. Les deux pattes 212 peuvent par exemple être faites du même matériau conducteur thermique que la paroi supérieure 211. Les deux pattes 212 peuvent par exemple être solidaires de la paroi supérieure 211, par exemple en ayant été formées par extrusion de matériau dans un bloc de matériau conducteur thermique.

Les deux pattes 212 et la paroi supérieure 211 sont agencées de manière à former un espace adapté à recevoir la carte d'extension. Par exemple, dans un mode de réalisation préférentiel représenté à la figure 2, cet agencement est en forme de « U », c'est-à-dire que les deux pattes 212 longent chacune un bord longitudinal de la surface inférieure de la paroi supérieure 211. On entend par « surface inférieure » la surface de la paroi supérieure 211 tournée vers le sol lorsque la paroi supérieure 211 est en position horizontale selon un plan horizontal suivant les axes longitudinal x et transversal y de la figure 2. On entend par « bord longitudinal » un bord de la surface inférieure de la paroi supérieure 211 suivant l'axe longitudinal x de la figure 2, c'est-à-dire un des deux bords les plus longs de la surface inférieure de la paroi supérieure 211, comme représenté à la figure 2. Ainsi, une patte 212 « longe » un bord longitudinal lorsque la patte 211 est parallèle à ce bord longitudinal. Par exemple, les pattes 212 peuvent être perpendiculaires à la paroi supérieure 211 tout en étant parallèles à un bord longitudinal de la surface inférieure de la paroi supérieure 211, comme représenté à la Figure 2.

L'espacement entre les deux pattes 211 est ainsi calculé pour recevoir la carte d'extension 30 entre les deux pattes 212. L'espacement entre les deux pattes 212 est donc d'au moins la largeur de la carte d'extension 30 lorsqu'elle est en disposition horizontale comme représenté à la figure 2, par exemple la largeur est d'au moins 22 millimètres dans le cas d'un disque SSD à facteur de forme M.2. La hauteur des pattes 212 selon l'axe z est calculée pour recevoir la carte d'extension 30, c'est-à-dire d'au moins l'épaisseur de la carte d'extension 30. La longueur de la paroi supérieure 211 peut aussi être calculée pour recevoir la carte d'extension 30, par exemple afin d'être en contact thermique avec toute la première surface d'échange thermique de la carte d'extension 30. Ainsi, si la carte d'extension 30 a une longueur de 80 millimètres, la paroi supérieure 211 aura une longueur supérieure à 80 millimètre, afin par exemple d'être en contact thermique avec toute la première surface d'échange thermique de la carte d'extension 30 et d'avoir une surface suffisamment important pour fixer mécaniquement la carte électronique d'interconnexion 22.

Lorsque la carte d'extension 30 est reçue dans l'espace formé par les pattes 212 et par la paroi supérieure 211, la première surface d'échange thermique 303 de la carte d'extension 30 est en contact thermique avec le surface inférieure de la paroi supérieure 211.

L'enveloppe 21 du module d'interconnexion dissipant 20 comprend en outre un système de fixation mécanique 214 configuré pour fixer mécaniquement de manière amovible la carte d'extension 30 au dissipateur thermique du module d'interconnexion dissipant 20. Dans le mode de réalisation préférentiel représenté Figure 2, la carte d'extension 30 est fixée mécaniquement de manière amovible par le système de fixation 214 à l'enveloppe 21 du dissipateur thermique. On entend par « fixer de manière amovible » le fait de pouvoir ancrer la carte d'extension 30 à l'enveloppe 21 de manière que cet ancrage soit réversible, c'est-à-dire que la carte d'extension 30 puisse ne plus être ancrée à l'enveloppe 21. Le système de fixation 214 peut par exemple comprendre une vis comprenant un filetage et un trou dans l'enveloppe 21 pour accueillir la vis, le trou comprenant un taraudage, permettant ainsi de visser la vis dans le trou et donc de fixer de manière amovible la carte d'extension 30 à l'enveloppe 21. En outre, le facteur de forme M.2 de la carte d'extension impose la présence d'un trou semi-circulaire sur le bord opposé au bord où est le premier connecteur M.2. Ce trou permet la fixation de la carte d'extension par la vis du système de fixation 214. Le système de fixation mécanique 214 peut comprendre plusieurs trous taraudés dans l'enveloppe 21 pour accueillir une vis, ce afin d'être compatible avec plusieurs longueur de cartes d'extension M.2 30. Par exemple, lorsque la carte d'extension 30 est un disque SSD à facteur de forme M2, le système de fixation mécanique 214 peut comprendre plusieurs trous, par exemple un trou permettant de fixer un disque SSD M.2 d'une longueur de 80 millimètres, et un autre trou permettant de fixer un disque SSD M.2 d'une longueur de 100 millimètres. Cela permet une compatibilité avec des cartes d'extension M.2 30 de plusieurs longueurs, et donc de pouvoir garder la même enveloppe 21 et le même module d'interconnexion dissipant 20 tout en changeant la carte d'extension M.2 30 pour une autre carte d'extension M.2 30 de longueur différente.

La carte électronique d'interconnexion 22 du module d'interconnexion dissipant 20 comprend un deuxième connecteur M.2 221 pour la connexion avec le premier connecteur M.2 301 de la carte d'extension 30. Par exemple, et comme représenté figure 2, la carte électronique d'interconnexion 22 peut comprendre un connecteur M.2 femelle 222, pour la connexion avec le connecteur M.2 mâle 301 de la carte d'extension 30. La carte électronique d'interconnexion 22 du module d'interconnexion dissipant 20 comprend en outre au moins un troisième connecteur électrique 223 pour la connexion avec au moins un quatrième connecteur électrique 304 de la première carte électronique, par exemple une carte mère. Ce troisième connecteur 223 peut par exemple être un connecteur d'extension de stockage lorsque la carte d'extension 30 est un disque SSD. Lorsque c'est le cas, le connecteur 223 peut alors être un connecteur OCuLink^{®} (selon la dénomination anglo-saxonne « Optical Copper Link » traduit littéralement en « Lien Cuivre Optique », Cu étant le symbole chimique du cuivre), un connecteur Thunderbolt^{®}, un connecteur PCI Express^{®}, un connecteur SATA (selon la dénomination anglo-saxonne « Serial Advanced Technology Attachment ») ou tout autre connecteur d'extension de stockage. Le quatrième connecteur 304 de la première carte électronique, par exemple une carte mère, est un connecteur de même type, configuré pour être connecté au troisième connecteur. Par exemple, il est un connecteur d'extension de stockage.

La carte électronique d'interconnexion 22 est configurée pour être fixée mécaniquement de manière amovible au dissipateur thermique comprenant l'enveloppe 21. Par exemple, comme représenté à la figure 2, la carte électronique d'interconnexion 22 peut être fixé mécaniquement de manière amovible à l'enveloppe 21. Pour réaliser cette fixation mécanique amovible, la carte électronique d'interconnexion 22 comprend par exemple un système de fixation 221 comprenant par exemple deux vis filetées. Le système de fixation 221 peut aussi comprendre un bloc comprenant des trous taraudés, pouvant par exemple avoir la fonction d'un écrou.

Ainsi, le bloc peut accueillir les vis filetées, qui peuvent se visser dans les trous taraudés du bloc, fixant ainsi mécaniquement de manière amovible la carte électronique d'interconnexion 22 à l'enveloppe 21. Ce bloc peut par exemple avoir une longueur égale à la largeur de la carte électronique d'interconnexion 22 et une largeur supérieure au diamètre du plus grand trou taraudé qu'il comporte. L'encombrement de ce bloc et son agencement sont tels qu'il ne perturbe pas le fonctionnement de la carte électronique d'interconnexion 22 et qu'il n'est pas en contact avec un composant électronique de la carte électronique d'interconnexion 22.

Le module d'interconnexion dissipant 20 est configuré pour être fixé mécaniquement de manière amovible à la première carte électronique 1, par exemple à une carte mère. Pour réaliser cette fixation, le module d'interconnexion dissipant 20 comprend un système de fixation mécanique, par exemple le système de fixation mécanique 201. Le système de fixation mécanique 201 peut par exemple comprendre trois vis filetées, chaque vis ayant une longueur de plus de la hauteur des pattes 212 pour pouvoir être vissées dans la première carte électronique 1 tout en traversant des trous, par exemple trois trous, compris dans l'enveloppe 21. L'enveloppe 21 peut par exemple comprendre deux trous pour accueillir deux des trois vis du système de fixation 201 proches d'un bord de la paroi supérieure 211 par exemple au niveau d'une extrémité de la carte d'extension 30 comme représenté figure 2. L'enveloppe peut comprendre un troisième trou pour accueillir la troisième vis du système de fixation 201 proche d'un bord opposé de la paroi supérieure 211, par exemple au niveau de la carte électronique d'interconnexion 22 comme représenté à la figure 2. La carte électronique d'interconnexion 22 peut aussi comprendre un trou, aligné avec le troisième trou de la paroi supérieure 211, afin de fixer mécaniquement de manière amovible l'ensemble du module d'interconnexion dissipant 20 à la première carte électronique 1.

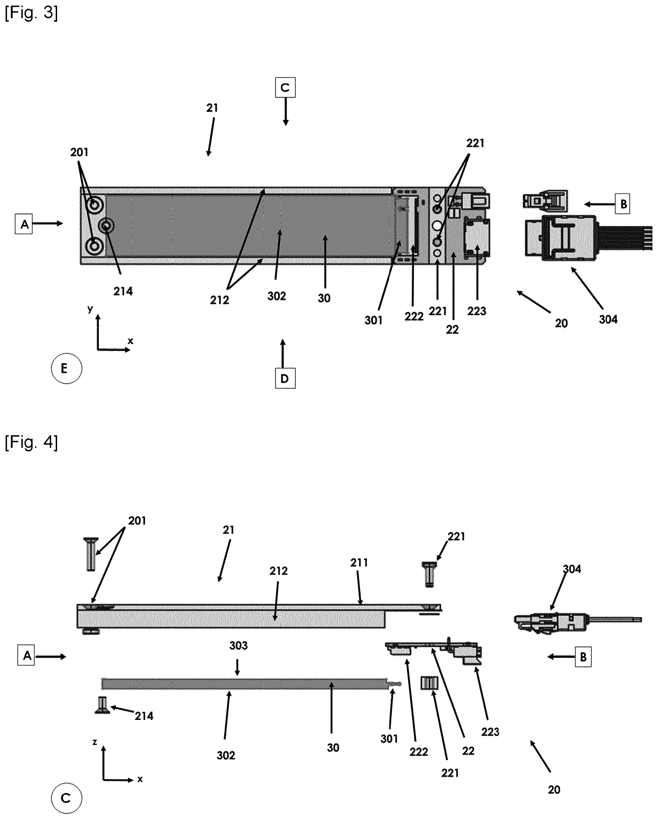

[Fig. 3] montre une représentation schématique du module d'interconnexion dissipant 20 selon un premier mode de réalisation de l'invention vu de dessous.

On entend par « vue de dessous » une vue selon le repère E. Le repère E représente une vue des surfaces tournées vers la première carte électronique 1 du module d'interconnexion dissipant 20 dans un plan suivant les axes longitudinal x et transversal y, lorsque le module d'interconnexion dissipant 20 est fixé mécaniquement de manière amovible en position horizontale à la surface supérieure de la première carte électronique 1. La première carte électronique 1 n'est pas représentée.

La Figure 3 représente deux repères C et D, chaque repère représentant une vue d'une face du module d'interconnexion dissipant 20. Le repère C représente une vue de la face C et le repère D représente une vue de la face D.

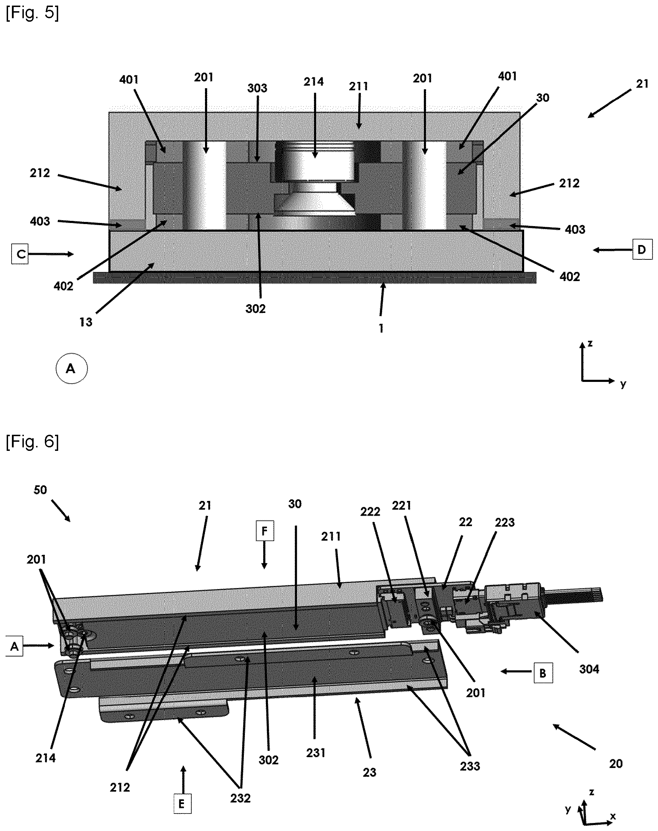

Dans le premier mode de réalisation de l'invention, représenté à la Figure 1, la carte d'extension 30 est fixée mécaniquement de manière amovible à l'enveloppe 21 du dissipateur du module d'interconnexion dissipant 20 via le système de fixation 214. Ainsi, la carte d'extension 30 est en contact thermique avec la paroi supérieure 211. La carte d'extension 30 n'est pas en contact thermique avec la surface inférieure des pattes 212 car cette surface inférieure des pattes 212 est destinée à être en contact thermique avec le système de refroidissement fluidique 13 comme il sera expliqué et représenté aux figures 5 et 6. On entend par « surface inférieure » des pattes 212 la surface visible en vue de dessous des pattes 212 lorsque le module d'interconnexion dissipant 20 est dans le mode de réalisation préférentiel, comme représenté à la Figure 3.

En outre, la carte électronique d'interconnexion 22 est fixée mécaniquement de manière amovible à l'enveloppe 21 du dissipateur thermique du module d'interconnexion dissipant 20 via le système de fixation 221.

La carte électronique d'interconnexion 22 peut par exemple avoir la même largeur que la paroi supérieure 211 de l'enveloppe 21 du dissipateur thermique du module d'interconnexion dissipant 20. Elle peut en outre comprendre un cinquième connecteur dédié à l'alimentation en énergie pour la connexion avec un sixième connecteur de la première carte électronique 1 dédié à l'alimentation.

[Fig. 4] montre une représentation schématique du module d'interconnexion dissipant 20 selon un premier mode de réalisation de l'invention en vue éclatée de face.

On entend par « vue de face » une vue du module d'interconnexion dissipant 20 dans un plan suivant les axes z et longitudinal x, selon le repère C.

La carte électronique d'interconnexion 22 peut par exemple être fixée mécaniquement de manière amovible à l'enveloppe 21 du dissipateur thermique du module d'interconnexion dissipant 20 en son centre selon l'axe longitudinal x. En effet, le fait que les trous du système de fixation 221 se situent au niveau de l'axe central de la carte électronique permet de laisser de la place sur les deux extrémités de la carte pour y placer le troisième connecteur 223 et le connecteur M.2 222.

La figure 4 montre que les pattes 212 de l'enveloppe 21 débutent avantageusement au niveau de la surface inférieure de la paroi supérieure 211, ce afin de gagner en rigidité et en solidité. En effet, si la paroi supérieure 211 et les pattes 212 ne sont pas solidaires, la paroi supérieure 211 repose ainsi sur la surface supérieure des pattes 212 dans le mode de réalisation préférentiel.

[Fig. 5] montre une représentation schématique du module d'interconnexion dissipant 20 selon un premier mode de réalisation de l'invention vu de côté.

On entend par « vu de côté » une vue selon un des repères de côté A ou B. La Figure 5 montre une représentation schématique du côté A selon le repère A. La vue du côté A est opposée à la vue de côté B du module d'interconnexion dissipant 20. La vue de côté B étant la vue dans le plan selon l'axe transversal y et selon l'axe z, du côté du connecteur 223 et de la carte électronique d'interconnexion 22.

La figure 5 représente le module d'interconnexion dissipant 20 lorsqu'il est fixé mécaniquement de manière amovible à la première carte électronique 1. Le module d'interconnexion dissipant 20 est fixé mécaniquement de manière amovible à un système de refroidissement fluidique 13 de la carte électronique 1 par le système de fixation 201 déjà présenté précédemment. Ce système de refroidissement fluidique 13 est fixé à la première carte électronique 1.

Dans une variante, le module d'interconnexion dissipant 20 peut être fixé mécaniquement de manière amovible directement à la carte électronique 1, par exemple via des trous réalisés dans le système de refroidissement fluidique 13 pour permettre au système de fixation 201 d'atteindre la première carte électronique 1.

Lorsque le module d'interconnexion dissipant 20 est fixé mécaniquement de manière amovible à la première carte électronique 1, par exemple en étant fixé mécaniquement de manière amovible au système de refroidissement fluidique 13 comme représenté à la figure 5, les pattes 212 sont en contact thermique avec le système de refroidissement fluidique 13 et avec la paroi supérieure 211. Comme représenté à la figure 5 et dans un mode de réalisation préférentiel, les pattes 212 sont solidaires de la paroi supérieure 211.

Lorsque l'on mentionne que « les pattes 212 sont en contact thermique avec le système de refroidissement fluidique 13 », on entend qu'au moins une partie de la surface inférieure des pattes 212 est en contact thermique avec au moins une partie du système de refroidissement fluidique 13 compris dans la première carte électronique 1.

La carte d'extension 30 est fixée mécaniquement de manière amovible à l'enveloppe 21 du dissipateur thermique du module d'interconnexion dissipant 20 à l'aide du système de fixation 214 présenté précédemment. La surface déchange thermique 303 de la carte d'extension 30 est en contact thermique avec la surface inférieure de la paroi supérieure 211. Dans un mode de réalisation préférentiel, et comme représenté à la figure 5, ce contact thermique est réalisé par une interface thermique.

Lorsque le module d'interconnexion dissipant 20 est fixé mécaniquement de manière amovible à la première carte électronique 1, par exemple en étant fixé mécaniquement de manière amovible au système de refroidissement fluidique 13 comme représenté à la figure 5, la surface d'échange thermique 302 de la carte d'extension 30 est avantageusement en contact thermique avec le système de refroidissement fluidique 13.

Le module d'interconnexion dissipant 20 selon l'invention permet ainsi de refroidir les deux surfaces d'échange thermique de la carte d'extension à facteur de forme M.2 30 tout en permettant une maintenance simple. En effet, il suffit à un opérateur d'utiliser les systèmes de fixation 201 et 214 pour désolidariser l'enveloppe 21 du dissipateur thermique du module d'interconnexion dissipant 20 de la première carte électronique 1, de la carte d'extension 30 et de la carte électronique d'interconnexion 22. Cela permet d'effectuer une maintenance de la partie dissipante du module d'interconnexion dissipant 20, c'est-à-dire du dissipateur thermique, tout en maintenant connectée la carte d'extension 30 à la première carte électronique 1. Cette connexion est réalisée par l'intermédiaire de la carte électronique d'interconnexion 22 afin d'être compatible avec plusieurs types de connecteurs, par exemple lorsque la première carte électronique 1 ne comprend pas de connecteur M.2, ou lorsqu'aucun de ses connecteurs M.2 ne sont disponibles. De plus cela permet, indépendamment de la disposition du connecteur de la première carte électronique 1, d'avoir la même disposition de la carte d'extension 30 lorsqu'elle est connectée et donc de pouvoir utiliser la même forme de dissipateur thermique dans le module d'interconnexion dissipant 20.

La forme de l'enveloppe 21 du dissipateur thermique en « U » permet en outre de protéger la carte d'extension 30. Cela permet aussi d'avoir le chemin thermique le plus court entre la surface d'échange thermique 303 de la carte d'extension 30 et le système de refroidissement fluidique 13 tout en ayant la carte d'extension 30 en disposition horizontale selon un plan suivant les axes longitudinal x et transversal y, afin d'avoir un encombrement vertical, donc selon l'axe z, le moins important possible.

Dans un mode de réalisation préférentiel, une interface thermique est intercalée au niveau de chaque contact thermique, comme représente à la figure 5. C'est-à-dire qu'une interface thermique est présente à chaque contact thermique, par exemple, une interface thermique 401 est présente entre une surface d'échange thermique de la carte d'extension 30 et la surface inférieure de la paroi supérieure 211. Par exemple, une interface thermique 403 est présente entre une patte 212 et le système de refroidissement fluidique 13. Par exemple, une interface thermique 402 est présente entre la carte d'extension 30 et le système de refroidissement fluidique 13.

[Fig. 6] montre une représentation schématique du module d'interconnexion dissipant 20 selon un deuxième mode de réalisation de l'invention en vue partiellement éclatée.

Le module d'interconnexion dissipant 20 est représenté figure 6 en trois dimensions selon trois axes x, y et z.

On entend par « vue partiellement éclatée » une vue dans laquelle l'ensemble des éléments n'est pas en vue éclatée. Par exemple, dans la figure 6, seule la paroi inférieure 23 est éclatée du reste du module d'interconnexion dissipant 20.

Le module d'interconnexion dissipant 20 comprend un dissipateur thermique 50 comprenant l'enveloppe 21 et une paroi inférieure 23. La paroi inférieure 23 comprend une paroi centrale 231, deux parois verticales 233 et deux pattes horizontales 232. Les deux parois verticales 233 sont en contact thermique avec la paroi centrale 231 et chaque paroi horizontale 233 est en contact thermique avec une patte horizontale 232.

La paroi inférieure 23 est configurée pour être en contact thermique avec la deuxième surface d'échange thermique 302 de la carte d'extension 30, avec chacune des deux pattes 212 de l'enveloppe 21 du dissipateur thermique 50 et avec le système de refroidissement fluidique 13 de la première carte électronique 1.

La paroi inférieure 23 comprend le même nombre de trous que le système de fixation 201 comprend de vis. Par exemple, comme représenté figure 6, le système de fixation 201 comprend trois vis et la paroi inférieure 23 comprend trois trous. Le système de fixation 201 peut ainsi avantageusement être utilisé pour fixer mécaniquement de manière amovible l'enveloppe 21 à la paroi inférieure 23 au lieu de fixer mécaniquement de manière amovible l'enveloppe 21 à la première carte électronique 1 comme dans le premier mode de réalisation. Le module d'interconnexion dissipant 20 peut être alors fixé mécaniquement de manière amovible à la première carte électronique 1 par un système de fixation, par exemple un système de fixation comprenant au moins deux vis. Les au moins deux vis fixent alors mécaniquement de manière amovible les pattes horizontales 232 de la paroi inférieure à la première carte électronique 1 par les trous des pattes horizontales 232. L'enveloppe 21 et la carte électronique d'interconnexion 22 étant fixées mécaniquement de manière amovible à la paroi inférieure 23, le module d'interconnexion dissipant 20 est alors fixé mécaniquement de manière amovible à la première carte électronique 1.

Dans un mode de réalisation préférentiel, les pattes horizontales 232, les paroi verticales 233 et la paroi centrale 231 de la paroi inférieure 23 sont solidaires, comme représenté à la Figure 6. La paroi inférieure 23 est alors une même pièce. La paroi inférieure 23 peut permettre par exemple de déporter le contact thermique entre le module d'interconnexion dissipant 20 et le système de refroidissement fluidique 13, par exemple lorsque le module d'interconnexion dissipant 20 ne peut être placé directement sur le système de refroidissement fluidique 13 pour des raisons de disposition des composants sur la première carte électronique 1, par exemple sur la carte mère d'une lame de calcul.

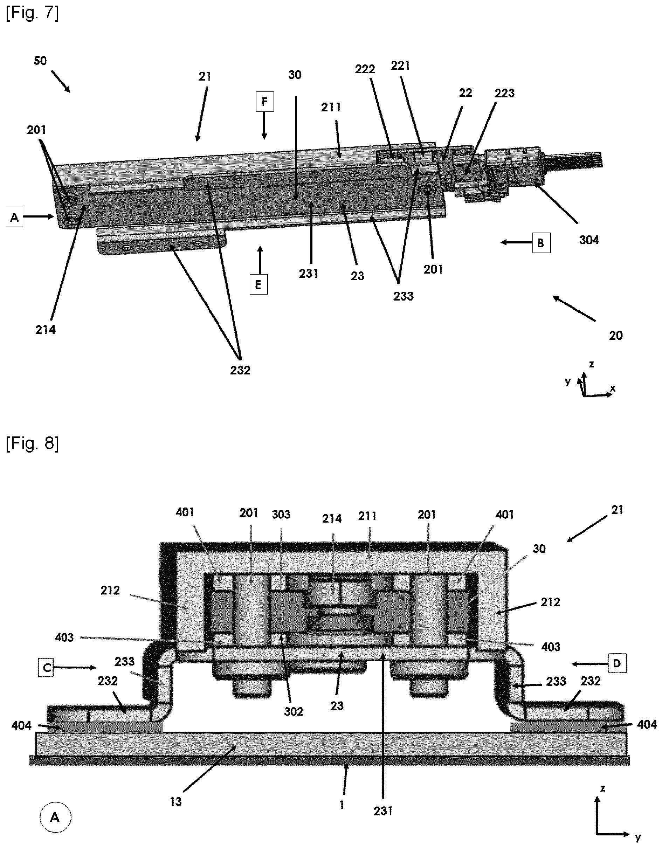

[Fig. 7] montre une représentation schématique du module d'interconnexion dissipant 20 selon un deuxième mode de réalisation de l'invention.

Le module d'interconnexion dissipant 20 est représenté figure 7 en trois dimensions selon trois axes x, y et z.

Le module d'interconnexion dissipant 20 à la figure 7 est représenté lorsque la paroi inférieure 23 est fixée mécaniquement de manière amovible par le système de fixation 201 à l'enveloppe 21 du dissipateur thermique 50 et à la carte électronique d'interconnexion 22.

[Fig. 8] montre une représentation schématique du module d'interconnexion dissipant 20 selon un deuxième mode de réalisation de l'invention vu de côté.

On entend par « vu de côté » une vue selon un des repères de côté A ou B. La Figure 8 montre une représentation schématique du côté A selon le repère A. La vue du côté A est opposée à la vue de côté B du module d'interconnexion dissipant 20. La vue de côté B étant la vue dans le plan selon l'axe transversal y et selon l'axe z, du côté du connecteur 223 et de la carte électronique d'interconnexion 22.

La figure 8 représente le module d'interconnexion dissipant 20 selon un deuxième mode de réalisation de l'invention lorsqu'il est fixé mécaniquement de manière amovible à la première carte électronique 1. Le module d'interconnexion dissipant 20 est fixé mécaniquement de manière amovible à un système de refroidissement fluidique 13 de la carte électronique 1 par le système de fixation 201 déjà présenté précédemment. Ce système de refroidissement fluidique 13 est fixé à la première carte électronique 1.

Lorsque le module d'interconnexion dissipant 20 selon le deuxième mode de réalisation de l'invention est fixé mécaniquement de manière amovible à la première carte électronique 1, par exemple en étant fixé mécaniquement de manière amovible au système de refroidissement fluidique 13 comme représenté à la figure 8, les pattes horizontales 232 de la paroi inférieure 23 sont en contact thermique avec le système de refroidissement fluidique 13 et chaque patte horizontale est en contact thermique avec une paroi verticale 233. Comme représenté à la figure 8 et dans un mode de réalisation préférentiel, les pattes 233 sont solidaires des parois verticales 233.

La paroi inférieure 23 est alors intercalée entre l'enveloppe 21 du dissipateur thermique 50 et le système de refroidissement fluidique 13 de la première carte électronique 1.

Lorsque l'on mentionne que « les pattes horizontales 233 sont en contact thermique avec le système de refroidissement fluidique 13 », on entend qu'au moins une partie de la surface inférieure des pattes horizontales 233 est en contact thermique avec au moins une partie du système de refroidissement fluidique 13 compris dans la première carte électronique 1.

Ce contact thermique permet de rediriger la chaleur émise par la carte d'extension 30 captée par la paroi centrale 231 de la paroi inférieure 23 et par la paroi supérieure 211 de l'enveloppe 21 vers le système de refroidissement fluidique 13.

Dans un mode de réalisation préférentiel, une interface thermique est intercalée au niveau de chaque contact thermique, comme représente à la figure 8. C'est-à-dire qu'une interface thermique est présente à chaque contact thermique, par exemple, une interface thermique 404 est présente entre chaque patte horizontale 232 et le système de refroidissement fluidique 13.

La paroi inférieure 23 permet aussi d'avoir une solution « clé en main » pour l'installation d'une carte d'extension 30 sur une première carte électronique 1 ayant peu de place disponible ou dont le système de refroidissement fluidique 13 est difficilement accessible. Cela permet en outre d'avoir une carte d'extension 30 prête à l'emploi, les contacts thermiques des surfaces d'échange thermique de la carte d'extension 30 étant déjà réalisés par des interfaces thermiques à l'intérieure du module d'interconnexion dissipant 20. Il suffit alors à un opérateur de réaliser un contact thermique des pattes horizontales 232 avec le système de refroidissement fluidique 13, de fixer mécaniquement de manière amovible le module d'interconnexion dissipant 20 à la première carte électronique 1 et de connecter le connecteur 223 de la carte électronique d'interconnexion à un connecteur 304 ad hoc de la première carte électronique 1.

## Revendications

1. Module d'interconnexion dissipant (20) pour carte d'extension (30) à facteur de forme M.2, ladite carte d'extension (30) devant être connectée à une première carte électronique (1) comprenant un système de refroidissement fluidique (13), ladite carte d'extension (30) comprenant une première surface d'échange thermique (302), une deuxième surface d'échange thermique (303) et au moins un premier connecteur M.2 (301) configuré pour être connecté à au moins un deuxième connecteur M.2 (222), ledit module d'interconnexion dissipant (20) étant **caractérisé en ce que** :
- le module d'interconnexion dissipant (20) comprend un dissipateur thermique, ledit dissipateur thermique comprenant :
∘ une enveloppe (21) comprenant une paroi supérieure (211) configurée pour être en contact thermique avec la première surface d'échange thermique (302) de la carte d'extension (30), l'enveloppe (21) comprenant en outre deux pattes (212), chaque patte (212) étant configurée pour être en contact thermique avec la paroi supérieure (211) du dissipateur thermique et pour être en contact thermique avec le système de refroidissement fluidique (13) de la première carte électronique (1), la paroi supérieure (211) et les deux pattes (212) de l'enveloppe (21) étant agencées de manière à former un espace adapté pour recevoir la carte d'extension (30),
∘ un système de fixation mécanique (214) configuré pour fixer mécaniquement de manière amovible la carte d'extension (30) au dissipateur thermique,
- le module d'interconnexion dissipant (20) comprend une carte électronique d'interconnexion (22), ladite carte électronique d'interconnexion (22) comprenant le deuxième connecteur M.2 (222), au moins un troisième connecteur électrique (223) configuré pour être connecté à au moins un quatrième connecteur électrique (304) de la première carte électronique (1), la carte électronique d'interconnexion (22) étant configurée pour être fixée mécaniquement de manière amovible au dissipateur thermique,
- le module d'interconnexion dissipant (20) est configuré pour être fixé mécaniquement de manière amovible à la première carte électronique (1).

2. Module d'interconnexion dissipant (20) selon la revendication précédente **caractérisé en ce que** le dissipateur thermique comprend en outre une paroi inférieure (23) configurée pour être en contact thermique avec la deuxième surface d'échange thermique (303) de la carte d'extension (30), avec chaque patte (212) de l'enveloppe (21) du dissipateur thermique et avec le système de refroidissement fluidique (13), ladite paroi inférieure (23) étant intercalée entre l'enveloppe (21) du dissipateur thermique et le système de refroidissement fluidique (13) de la première carte électronique (1).

3. Module d'interconnexion dissipant (20) selon l'une quelconque des revendications précédentes **caractérisé en ce que** chaque contact thermique du dissipateur thermique est réalisé par une interface thermique (401, 402, 403, 404), chaque interface thermique (401, 402, 403, 404) étant comprise dans une pluralité d'interfaces thermiques (401, 402, 403, 404), la pluralité d'interfaces thermiques (401, 402, 403, 404) étant comprise dans le dissipateur thermique.

4. Module d'interconnexion dissipant (20) selon l'une quelconque des revendications précédentes **caractérisé en ce qu'**il est adapté à accommoder la carte d'extension (30) à facteur de forme M.2, la carte d'extension (30) à facteur de forme M.2 étant un disque SSD à facteur de forme M.2.

5. Module d'interconnexion dissipant (20) selon l'une quelconque des revendications précédentes **caractérisé en ce que** le système de fixation mécanique (214) du dissipateur thermique comprend au moins une vis.

6. Module d'interconnexion dissipant (20) selon l'une quelconque des revendications précédentes **caractérisé en ce qu'**il est configuré pour être fixé mécaniquement de manière amovible à la première carte électronique (1) par un système de fixation (201) comprenant au moins une vis.

7. Module d'interconnexion dissipant (20) selon l'une quelconque des revendications précédentes **caractérisé en ce que** la carte électronique d'interconnexion (22) est fixée mécaniquement de manière amovible au dissipateur thermique par un système de fixation (221) comprenant au moins une vis.

## Patentansprüche

1. Dissipatives Verbindungsmodul (20) für eine Erweiterungskarte (30) mit M.2-Formfaktor, wobei die Erweiterungskarte (30) mit einer ersten Elektronikkarte (1) zu verbinden ist, die ein fluidisches Kühlsystem (13) umfasst, wobei die Erweiterungskarte (30) eine erste Wärmeaustauschoberfläche (302), eine zweite Wärmeaustauschoberfläche (303) und mindestens einen ersten M.2-Verbinder (301) umfasst, der konfiguriert ist, um mit mindestens einem zweiten M.2-Verbinder (222) verbunden zu werden, wobei das dissipative Verbindungsmodul (20) **dadurch gekennzeichnet ist, dass:**
- das dissipative Verbindungsmodul (20) einen Kühlkörper umfasst, wobei der Kühlkörper umfasst:
o eine Abdeckung (21), die eine Deckwand (211) umfasst, die konfiguriert ist, um in Wärmekontakt mit der ersten Wärmeaustauschoberfläche (302) der Erweiterungskarte (30) zu stehen, wobei die Abdeckung (21) ferner zwei Zungen (212) umfasst, wobei jede Zunge (212) konfiguriert ist, um in Wärmekontakt mit der Deckwand (211) des Kühlkörpers zu stehen und um in Wärmekontakt mit dem fluidischen Kühlsystem (13) der ersten Elektronikkarte (1) zu stehen, wobei die Deckwand (211) und die zwei Zungen (212) der Abdeckung (21) so angeordnet sind, dass sie einen Raum bilden, der zum Aufnehmen der Erweiterungskarte (30) geeignet ist,
o ein mechanisches Befestigungssystem (214), das konfiguriert ist, um die Erweiterungskarte (30) auf lösbare Weise an dem Kühlkörper mechanisch zu befestigen,
- das dissipative Verbindungsmodul (20) eine Verbindungselektronikkarte (22) umfasst, wobei die Verbindungselektronikkarte (22) den zweiten M.2-Verbinder (222), mindestens einen dritten elektrischen Verbinder (223) umfasst, der konfiguriert ist, um mit mindestens einem vierten elektrischen Verbinder (304) der ersten Elektronikkarte (1) verbunden zu werden, wobei die Verbindungselektronikkarte (22) konfiguriert ist, um auf lösbare Weise an dem Kühlkörper mechanisch befestigt zu sein,
- das dissipative Verbindungsmodul (20) konfiguriert ist, um auf lösbare Weise an der ersten Elektronikkarte (1) mechanisch befestigt zu sein.

2. Dissipatives Verbindungsmodul (20) nach dem vorstehenden Anspruch, **dadurch gekennzeichnet, dass** der Kühlkörper ferner eine Bodenwand (23) umfasst, die konfiguriert ist, um mit der zweiten Wärmeaustauschoberfläche (303) der Erweiterungskarte (30), mit jeder Zunge (212) der Abdeckung (21) des Kühlkörpers und mit dem fluidischen Kühlsystem (13) in Wärmekontakt zu stehen, wobei die Bodenwand (23) zwischen der Abdeckung (21) des Kühlkörpers und dem fluidischen Kühlsystem (13) der ersten Elektronikkarte (1) eingebettet ist.

3. Dissipatives Verbindungsmodul (20) nach einem der vorstehenden Ansprüche, **dadurch gekennzeichnet, dass** jeder Wärmekontakt des Kühlkörpers durch eine Wärmeschnittstelle (401, 402, 403, 404) hergestellt wird, wobei jede Wärmeschnittstelle (401, 402, 403, 404) in einer Vielzahl von Wärmeschnittstellen (401, 402, 403, 404) enthalten ist, wobei die Vielzahl von Wärmeschnittstellen (401, 402, 403, 404) in dem Kühlkörper enthalten ist.

4. Dissipatives Verbindungsmodul (20) nach einem der vorstehenden Ansprüche, **dadurch gekennzeichnet, dass** es geeignet ist, die Erweiterungskarte (30) mit M.2-Formfaktor unterzubringen, wobei die Erweiterungskarte (30) mit M.2-Formfaktor ein SSD-Laufwerk mit M.2-Formfaktor ist.

5. Dissipatives Verbindungsmodul (20) nach einem der vorstehenden Ansprüche, **dadurch gekennzeichnet, dass** das mechanische Befestigungssystem (214) des Kühlkörpers mindestens eine Schraube umfasst.

6. Dissipatives Verbindungsmodul (20) nach einem der vorstehenden Ansprüche, **dadurch gekennzeichnet, dass** es konfiguriert ist, um durch ein mindestens eine Schraube umfassendes Befestigungssystem (201) auf lösbare Weise an der ersten Elektronikkarte (1) mechanisch befestigt zu werden.

7. Dissipatives Verbindungsmodul (20) nach einem der vorstehenden Ansprüche, **dadurch gekennzeichnet, dass** die Verbindungselektronikkarte (22) auf lösbare Weise an dem Kühlkörper durch ein mindestens eine Schraube umfassendes Befestigungssystem (221) mechanisch befestigt ist.

## Claims

1. A dissipating interconnection module (20) for an M.2 form-factor expansion card (30), said expansion card (30) needing to be connected to a first electronic board (1) comprising a fluidic cooling system (13), said expansion card (30) comprising a first heat-exchange surface (302), a second heat-exchange surface (303) and at least one first M.2 connector (301), configured to be connected to at least one second M.2 connector (222), said dissipating interconnection module (20) being **characterized in that:**
- the dissipating interconnection module (20) comprises a heat sink, said heat sink comprising:
∘ an envelope (21) comprising an upper wall (211) configured to be in thermal contact with the first heat-exchange surface (302) of the expansion card (30), the envelope (21) further comprising two tabs (212), each tab (212) being configured to be in thermal contact with the upper wall (211) of the heat sink and to be in thermal contact with the fluidic cooling system (13) of the first electronic board (1), the upper wall (211) and the two tabs (212) of the envelope (21) being arranged so as to form a space capable of receiving the expansion card (30);
∘ a mechanical attachment system (214) configured to removably mechanically attach the expansion card (30) to the heat sink;
- the dissipating interconnection module (20) comprises an interconnection electronic card (22), said interconnection electronic card (22) comprising the second M.2 connector (222), at least one third electric connector (223) configured to be connected to at least one fourth electric connector (304) of the first electronic board (1), the interconnection electronic card (22) being configured to be removably mechanically attached to the heat sink,
- the dissipating interconnection module (20) is configured to be removably mechanically attached to the first electronic board (1).

2. The dissipating interconnection module (20) according to the preceding claim, **characterized in that** the heat sink further comprises a lower wall (23) configured to be in thermal contact with the second heat-exchange surface (303) of the expansion card (30), with each tab (212) of the envelope (21) of the heat sink and with the fluidic cooling system (13), said lower wall (23) being inserted between the envelope (21) of the heat sink and the fluidic cooling system (13) of the first electronic board (1).

3. The dissipating interconnection module (20) according to any one of the preceding claims, **characterized in that** each thermal contact of the heat sink is implemented by a thermal interface (401, 402, 403, 404), each thermal interface (401, 402, 403, 404) being comprised in a plurality of thermal interfaces (401, 402, 403, 404), the plurality of thermal interfaces (401, 402, 403, 404) being comprised in the heat sink.

4. The dissipating interconnection module (20) according to any one of the preceding claims, **characterized in that** it is capable of accommodating the M.2 form-factor expansion card (30), the M.2 form-factor expansion card (30) being an M.2 form-factor SSD disk.

5. The dissipating interconnection module (20) according to any one of the preceding claims, **characterized in that** the mechanical attachment system (214) of the heat sink comprises at least one screw.

6. The dissipating interconnection module (20) according to any one of the preceding claims, **characterized in that** it is configured to be removably mechanically attached to the first electronic board (1) by an attachment system (201) comprising at least one screw.

7. The dissipating interconnection module (20) according to any one of the preceding claims **characterized in that** the interconnection electronic card (22) is removably mechanically attached to the heat sink by an attachment system (221) comprising at least one screw.
